# EUROPÄISCHE PATENTSCHRIFT

(11) **EP 3 504 442 B1**
(45) Veröffentlichungstag und Bekanntmachung des Hinweises auf die Patenterteilung: **11.05.2022**
(21) Anmeldenummer: 17749448.1
(22) Anmeldetag: 08.08.2017
(51) Int. Cl.: F04D 27/00, F04D 29/42, G01F 1/115

(54) **RADIALGEBLÄSE MIT FLÜGELRAD ZUR VOLUMENSTROMMESSUNG**
RADIAL FAN HAVING AN IMPELLER FOR VOLUME FLOW MEASUREMENT
VENTILATEUR RADIAL MUNI D'UNE ROUE À AILETTES SERVANT À MESURER UN DÉBIT VOLUMIQUE

(30) Priorität: 23.08.2016 DE 102016115615
(43) Veröffentlichungstag der Anmeldung: 03.07.2019
(73) Patentinhaber: ebm-papst Mulfingen GmbH & Co. KG, 74673 Mulfingen (DE)
(72) Erfinder: HAAF, Oliver, 74635 Kupferzell (DE); HELI, Thomas, 74595 Langenburg (DE); GEBERT, Daniel, 74613 Öhringen (DE); RIEGLER, Peter, 97944 Boxberg (DE); SCHAAF, Valerius, 74635 Kupferzell (DE)
(74) Vertreter: Staeger & Sperling Partnerschaftsgesellschaft mbB
(86) Internationale Anmeldenummer: PCT/EP2017/069996
(87) Internationale Veröffentlichungsnummer: WO 2018/036802

(56) Entgegenhaltungen:
- EP-A2- 1 197 244
- GB-A- 2 049 925
- GB-A- 2 504 002
- JP-A- H04 125 421

## Beschreibung

Die Erfindung betrifft ein Radialgebläse, dessen geförderter Volumenstrom besser bestimmbar ist.

In vielen Anwendungen der Luft- und Klimatechnik ist es notwendig, den geförderten Volumenstrom eines Gebläses bzw. Ventilators zu bestimmen bzw. konstant zu regeln. Darüber hinaus sind in derartigen Anwendungen die Anforderungen an ein möglichst geringes Ventilatorgeräusch hoch.

Herkömmlicherweise wurden in der Luft- und Klimatechnik Trommelläufer-Ventilatoren eingesetzt, da sich diese auch unter gestörten Zuströmbedingungen durch ein gutes Geräuschverhalten auszeichnen. Die Volumenstrombestimmung ist bei Trommelläufer-Ventilatoren durch einen eindeutigen Zusammenhang zwischen Leistungsaufnahme und Volumenstrom bei konstanter Drehzahl möglich. Nachteilig ist jedoch der im Vergleich zu Radialventilatoren, insbesondere mit Gebläserädern mit rückwärts gekrümmten Schaufeln, relativ niedrige Wirkungsgrad.

Aufgrund gestiegener Effizienzanforderungen werden die Trommelläufer-Ventilatoren mehr und mehr von Radialventilatoren, die ggf. rückwärts gekrümmte Schaufeln aufweisen, verdrängt. Bei diesen besteht jedoch kein eindeutiger Zusammenhang zwischen Leistungsaufnahme und Volumenstrom bei konstanter Drehzahl. Deshalb ist zur Bestimmung des geförderten Volumenstroms ein anderes Verfahren notwendig. Eine bekannte Lösung ist die Entnahme des statischen Drucks in der Einlaufdüse des Ventilators mit Hilfe einer Ringleitung. Mit diesem Verfahren lässt sich aus dem gemessenen statischen Druck direkt der Volumenstrom ermitteln. Typischerweise werden drei oder vier Druckentnahmestutzen über eine Ringleitung verbunden und mittels einer Schlauchleitung ein Drucksensor angeschlossen. Eine solche (Schlauch-) Ringleitung verursacht jedoch einen hohen Montageaufwand und mithin hohe Kosten.

Außerdem ist bei der Berechnung nachteilig, dass zwischen dem geförderten Volumenstrom und dem Wirkdruck ein quadratischer Zusammenhang besteht, wodurch sich die Messgenauigkeit bei kleinen Volumenströmen deutlich verschlechtert.

Der Erfindung liegt deshalb die Aufgabe zugrunde, ein Radialgebläse bereit zu stellen, dessen tatsächlich geförderter Volumenstrom bei kleinen Volumenströmen, insbesondere auch im Bereich unterhalb von 10% des Maximalvolumenstromes, mit möglichst geringer Abweichung bestimmt werden kann.

Diese Aufgabe wird durch die Merkmalskombination gemäß Patentanspruch 1 gelöst.

Erfindungsgemäß wird ein Radialgebläse mit einem Gehäuse vorgeschlagen, in dem ein motorisch antreibbares Gebläserad angeordnet ist, das im Betrieb einen Luftvolumenstrom erzeugt. Das Gehäuse weist einen Ausblasabschnitt auf, in dem ein Flügelrad angeordnet ist, das eine Vielzahl von in Umfangsrichtung beabstandete Flügelradschaufeln aufweist, über die das Flügelrad von dem durch das Gebläserad erzeugten Luftvolumenstrom antreibbar ist. Das Flügelrad ist passiv im Ausblasabschnitt und rotiert nur, wenn das aktiv motorisch angetriebene Gebläserad den Luftvolumenstrom generiert. Die Neigung bzw. Krümmung der Flügelradschaufeln ist passend zu unterschiedlichen Volumenströmen der jeweiligen Radialgebläse anpassbar. Die Rotation und Drehzahl des Flügelrads kann erfasst und als Signal zur weiteren Berechnung ausgegeben werden. Die Signalverarbeitung erfolgt über ein Steuergerät. Die Empfindlichkeit des Flügelrades im Ausblasabschnitt ist hoch, so dass sowohl bei geringen als auch bei hohen Luftvolumenströmen eine entsprechend geringe bzw. hohe Drehzahl des Flügelrads feststellbar ist. Dabei steht die Drehzahl des Flügelrads im Wesentlichen in einem linearen Zusammenhang zu dem Luftvolumenstrom und bildet erfindungsgemäß die Bezugsgröße zur Bestimmung des Luftvolumenstroms.

Das Flügelrad beeinflusst durch Erfüllung einer Gleichrichterfunktion auch die Strömung im Ausblasabschnitt positiv und reduziert die Geräuschentwicklung. Die Effizienz des Radialgebläses verringert sich durch die Verwendung des Flügelrads nicht.

In einer günstigen Ausführungsvariante ist vorgesehen, dass das Flügelrad die Ausblasquerschnittsfläche des Ausblasabschnitts vollständig überdeckt.

Das hat zur Folge, dass der gesamte vom Gebläserad erzeugte Luftvolumenstrom durch das Flügelrad gefördert wird. Dies wirkt sich zusätzlich positiv auf die Genauigkeit bei geringem Luftvolumenstrom aus. Die Ausblasquerschnittsfläche des Ausblasabschnitts sowie das Flügelrad sind einer vorteilhaften Ausgestaltung rund.

In einer Weiterbildung weist das Flügelrad einen die Flügelradschaufeln radial außenseitig umgebenden Ring auf, der sich in Umfangsrichtung entlang dem jeweiligen radialen Ende jeder der Vielzahl der Flügelradschaufeln erstreckt. Der umlaufende Ring bildet einen definierten äußeren Umfangsrand für die Flügelradschaufeln, entlang dem der Luftvolumenstrom innenseitig durch das Flügelrad strömt. Dabei wird in einer günstigen Ausführung vorgesehen, dass der Innendurchmesser Di des Rings gegenüber dem Ausblasdurchmesser Da des Ausblasabschnitts ein vorbestimmtes Größenverhältnis aufweist, so dass gilt 0,9*Da ≤ Di ≤ 1,1*Da, weiter bevorzugt 0,95*Da ≤ Di ≤ 1,05*Da.

Bei einem Ausführungsbeispiel des Radialgebläses weist der Ausblasabschnitt mindestens eine innenseitige umlaufende Nut auf, in die sich das Flügelrad radial hinein erstreckt. Insbesondere wird vorgesehen, dass der Ring innerhalb der Nut verläuft. In einer vorteilhaften Lösung verläuft die Innenfläche des Rings bündig zur Innenwand des an die Nut angrenzenden Ausblasabschnitts.

Bei einer Variante des Radialgebläses ist zwischen dem Flügelrad und dem Gehäuse ein umlaufender Spalt S vorgesehen. Der Spalt S weist im Verhältnis zum Ausblasdurchmesser eine vorbestimmte Größe auf, so dass gilt 0,0025*Da ≤ S ≤ 0,05*Da, weiter bevorzugt 0,005*Da ≤ S ≤ 0,025*Da. Absolut gesehen liegt die bevorzugte Spaltgröße in einem Bereich von 0,3 bis 6 mm, weiter bevorzugt zwischen 0,6 und 3mm. Die Geräuschentwicklung des Radialgebläses kann durch das Vorsehen des Spalts in der entsprechenden Größe positiv beeinflusst werden.

Zur Anbindung der Flügelradschaufeln weist das Flügelrad axial mittig eine günstigerweise über Wälzlager, vorzugsweise Kugellager gelagerte Nabe auf. Die Nabe bestimmt einen Nabendurchmesser N, der zur Verbesserung der Strömungseigenschaften eine vorbestimmte Größe im Verhältnis zum Ausblasdurchmesser Da aufweist, so dass gilt 0,05*Da ≤ N ≤ 0,3*Da, weiter bevorzugt 0,1*Da ≤ N ≤ 0,2*Da. Strömungstechnisch ist ferner eine Ausführung vorteilhaft, bei der die Nabe des Flügelrads in zumindest einer axialen Richtung, insbesondere in Ausblasrichtung konisch zur Rotationsachse zulaufend ausgebildet ist.

Bezüglich der Flügelradschaufeln des Radialgebläses wird in einer Ausführung vorgesehen, dass ihre axiale Länge L im Verhältnis zum Ausblasdurchmesser Da in einem Bereich festgelegt ist, so dass gilt 0,05*Da ≤ L ≤ 0,3*Da, weiter bevorzugt 0,1*Da ≤ L ≤ 0,2*Da.

Zur Fixierung des Flügelrads an dem Ausblasabschnitt des Radialgebläses weist das Flügelrad einen axial zu den Flügelradschaufeln beabstandet angeordneten Tragring auf, der in den Ausblasabschnitt des Gehäuses eingreift. Der Tragring umfasst in einem Ausführungsbeispiel zumindest eine Tragstrebe, wobei vorteilhafterweise eine Vielzahl von Tragstreben sternförmig zur axialen Mitte weisend angeordnet sind. In der axialen Mitte ist eine Achsaufnahme ausgebildet, innerhalb der die Achse für den rotierenden und die Flügelradschaufeln aufweisenden Abschnitt des Flügelrads aufgenommen ist. An die Achsaufnahme schließt sich in axialer Richtung die Lagerung der Nabe an. Die Anzahl der Tragstreben ist in einer günstigen Ausführung ungleich der Anzahl der Flügelradschaufeln, insbesondere geringer. In einer Weiterbildung weist die mindestens eine Tragstrebe des Tragrings ein Tragflügelprofil auf, dessen flache Anströmkante in Strömungsrichtung senkrecht oder im Wesentlichen senkrecht zur Rotationsachse gerichtet ist.

Bezüglich der Befestigung des Tragrings an dem Ausblasabschnitt ist vorteilhafterweise vorgesehen, dass der Tragring im montierten Zustand des Flügelrads formschlüssig in die Nut des Ausblasabschnitts eingreift. Das Gehäuse des Radialgebläses ist vorzugsweise mehrteilig und insbesondere im Ausblasabschnitt im Radialschnitt getrennt ausgebildet, so dass der Tragring des Flügelrads in eine erste Gehäusehälfte einsetzbar und durch die Montage der zweiten Gehäusehälfte in der Position fixierbar ist. Über radial vorstehende Befestigungsstifte an dem Tragring und entsprechende Löcher an dem Gehäuse kann eine vorbestimmte Befestigungsposition eingehalten und erreicht werden.

Zur Bestimmung der Drehzahl des Flügelrads weist es in einer Variante Mittel zur Feststellung der Rotationsgeschwindigkeit der Flügelradschaufeln auf. Derartige Mittel können beispielsweise durch einen oder mehrere Magneten an den Flügelradschaufeln oder in den die Flügelradschaufeln umgebenden Ring integriert bereitgestellt werden, deren Bewegung über einen Hallsensor erfasst wird. Der Hallsensor wird in einer Ausführungsvariante außenseitig am Gehäuse im Ausblasabschnitt des Radialgebläses auf Höhe der Flügelradschaufeln angeordnet. Die Signalerfassung ist somit räumlich von der Strömung getrennt und beeinflusst diese nicht.

In einer Weiterbildung ist das Radialgebläse dadurch gekennzeichnet, dass an dem Flügelrad ein Temperatursensor und/oder Feuchtesensor angeordnet ist, der die Temperatur und/oder Feuchte des Luftvolumenstroms erfasst. Über die Werte von Temperatur und Feuchte lässt sich neben dem Luftvolumenstrom unmittelbar auch der Luftmassestrom bestimmen.

Sämtliche offenbarten Merkmale sind beliebig kombinierbar, soweit dies technisch möglich und nicht widersprüchlich ist. Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine Explosionsdarstellung eines Radialgebläses;
- Fig. 2: eine seitliche Schnittansicht des Flügelrads des Radialgebläses aus Fig. 1,
- Fig. 3: eine teilweise Schnittansicht des Radialgebläses aus Fig. 1.

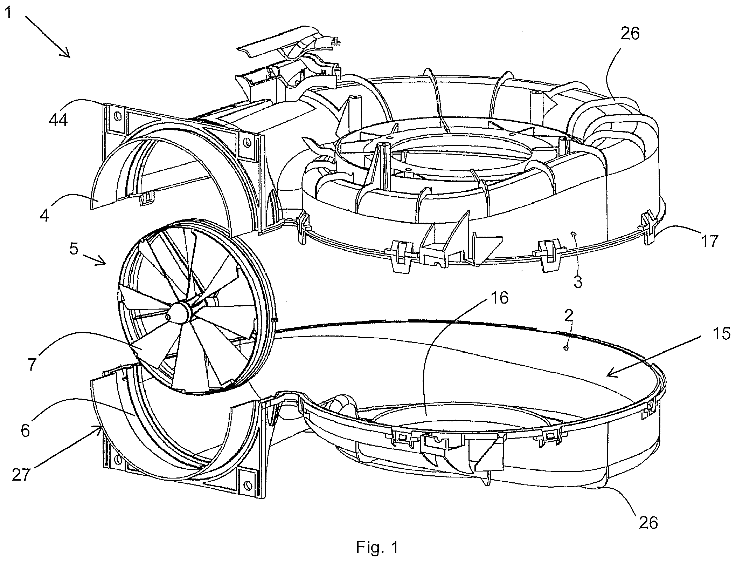

Gleiche Bezugszeichen benennen gleiche Teile in allen Ansichten. In Figur 1 ist ein Radialgebläse 1 mit einem aus einem unteren Gehäuseteil 2 und einem oberen Gehäuseteil 3 gebildeten spiralförmigen Gehäuse mit einem sich in Umfangsrichtung zur Auslassöffnung 27 hin erweiternden Druckraum 15 in einer Explosionsdarstellung gezeigt. Das untere Gehäuseteil 2 weist eine axiale Ansaugöffnung 16 auf. Beide Gehäuseteile 2, 3 umfassen mehrere außenseitig in Umfangsrichtung beabstandet von radial innen nach radial außen verlaufende Versteifungsrippen 26. Über Befestigungsmittel 17 wie z.B. Klemmen oder Rasthaken werden die beiden Gehäuseteile 2, 3 miteinander lösbar verbunden. Wenn auch nicht explizit dargestellt ist in dem Gehäuse das über einen Elektromotor angetriebene Gebläserad angeordnet, das im Betrieb den Luftvolumenstrom von der Ansaugöffnung 16 zur Ausblasöffnung 27 erzeugt.

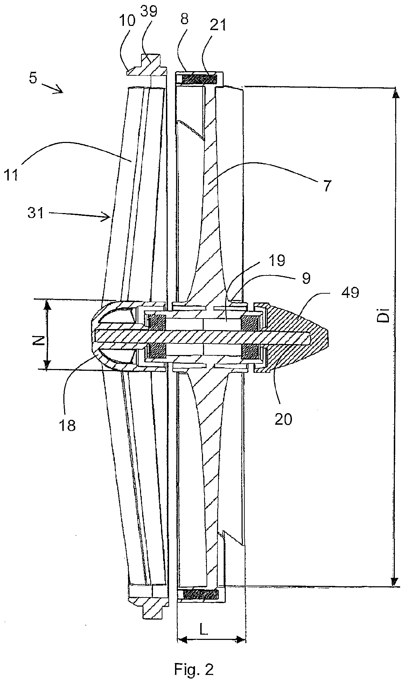

Das Gehäuse umfasst einen geradlinig verlaufenden Ausblasabschnitt 4 mit einem außenseitig daran ausgebildeten Befestigungsflansch 44 auf. Die Ausblasquerschnittsfläche des Ausblasabschnitts 4 ist rund. Der Ausblasabschnitt 4 weist eine umlaufende Vertiefung bzw. Nut 6 auf, in die das in Figur 2 detailliert dargestellte Flügelrad 5 eingesetzt und fixiert ist.

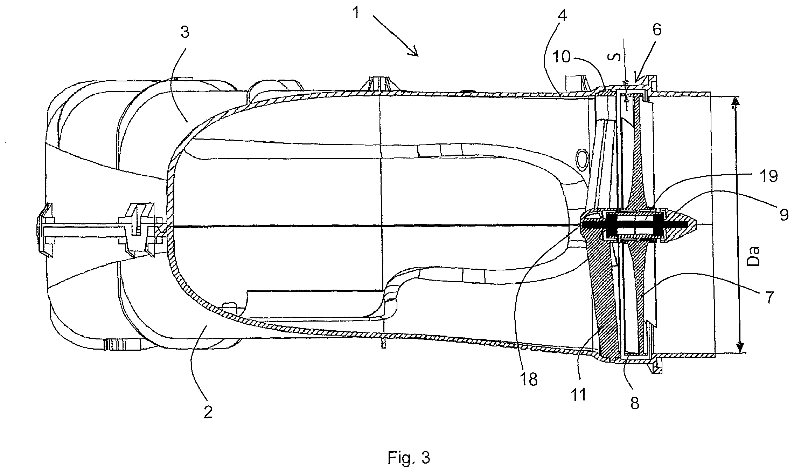

Bezugnehmend auf Fig. 2 ist das ausschließlich durch den durch das Gebläserad erzeugten Luftvolumenstrom angetriebene Flügelrad 5 in einer seitlichen Schnittansicht dargestellt. Es weist acht in Umfangsrichtung beabstandete und gegenüber der Rotationsachse geneigte Flügelradschaufeln 7 auf, die sich in radialer Richtung so weit nach außen erstrecken, dass die Ausblasquerschnittsfläche des Ausblasabschnitts 4 vollständig überdeckt ist. Über den axial zu den Flügelradschaufeln 7 beabstandet angeordnete Tragring 10 greift das Flügelrad 5 fixierend in die Nut 6 des Ausblasabschnitts 4 des Gehäuses ein. An dem Tragring 10 ist hierfür einstückig ein in radialer Richtung vorstehender Zapfen 39 ausgebildet. Im an dem Gehäuse montierten Zustand wird das Flügelrad 5 über den Tragring im Ausblasabschnitt 4 durch die beiden Gehäuseteile 2, 3 positionsfest gehalten. Der Tragring 10 umfasst ferner fünf sich zur Rotationsachse erstreckende Tragstreben 11 auf, die mit der Achsaufnahme 18 verbunden sind. Die Tragstreben 11 sind mit einem Tragflügelprofil ausgebildet, dessen Längserstreckung in Strömungsrichtung verläuft und dessen flache Anströmkante 31 in Strömungsrichtung im Wesentlichen senkrecht zur Rotationsachse gerichtet ist. Von der Achsaufnahme 18 erstreckt sich entlang der Rotationsachse die über zwei Kugellager 19 gelagerte Achse 20 zur Aufnahme der Nabe 9 der Flügelradschaufeln 7. Die Nabe 9 ist mehrteilig ausgebildet und weist einen aufgesetzten, konisch zulaufenden Abschnitt 49 auf, dessen freies axiales Ende in Strömungsrichtung weist. Die Achse 20 erstreckt sich bis in den aufgesetzten Abschnitt 49 hinein. Der Nabendurchmesser N des Flügelrads 5 ist um den Faktor 0,15 kleiner als der in Fig. 3 gekennzeichnete Ausblasdurchmesser Da.

Das jeweilige radiale Ende der Flügelradschaufeln 7 ist durch den umlaufenden Ring 8 verbunden, innerhalb dem gegenüberliegend Magnete 21 angeordnet sind. Über die Magnete 21 und einen außenseitig am Gehäuse angeordneten Hallsensor ist die Drehzahl des Flügelrads 5 bestimmbar. Der Innendurchmessers Di des Rings 8 entspricht in der gezeigten Ausführung dem Ausblasdurchmesser Da des Ausblasabschnitts 4, so dass ein bündiger

Übergang zu dem Gehäuse entsteht. Die jeweilige axiale Länge L der Flügelradschaufeln 7 ist in dem Ausführungsbeispiel gegenüber dem Ausblasdurchmesser Da um den Faktor 0,125 kleiner.

Bezugnehmend auf Fig. 3 ist die Befestigung und das Zusammenwirken zwischen Flügelrad 5 und Ausblasabschnitt 4 detaillierter in einer Schnittansicht dargestellt. Im Ausblasabschnitt 4 ist innenseitige die umlaufende Nut 6 ausgebildet, deren Länge entlang der Rotationsachse des Flügelrads 5 groß genug ist, um das Flügelrad 5 vollständig aufzunehmen, In der Nut 6 ist eine Vertiefung ausgebildet, in die der Zapfen 39 des Tragrings 11 formschlüssig eingreift und somit das Flügelrad 5 an dem Ausblasabschnitt 4 des Gehäuses fixiert. Zwischen dem die Flügelradschaufeln 7 umgebenden Ring 8 und der Innenwand der Nut 6 im Ausblasabschnitt 4 des Gehäuses ist der umlaufende Spalt S vorgesehen, der gegenüber dem Ausblasdurchmesser Da um den Faktor 0,01 kleiner ist. Das Flügelrad 5 ist gegenüber der Ausblasöffnung 27 zurückversetzt im Ausblasabschnitt 4 angeordnet, so dass in Strömungsrichtung gesehen nach dem Flügelrad 5 und in Anschluss an den Flansch 44 ein Strömungsabschnitt im Gehäuse mit rundem Querschnitt nachfolgt.

## Patentansprüche

1. Radialgebläse mit einem Gehäuse, in dem ein motorisch antreibbares Gebläserad angeordnet ist, das im Betrieb einen Luftvolumenstrom erzeugt, wobei das Gehäuse einen Ausblasabschnitt (4) aufweist, in dem ein Flügelrad (5) angeordnet ist, das eine Vielzahl von in Umfangsrichtung beabstandete Flügelradschaufeln (7) aufweist, über die das Flügelrad (5) von dem durch das Gebläserad erzeugten Luftvolumenstrom antreibbar ist, **dadurch gekennzeichnet, dass** das Flügelrad (5) einen axial zu den Flügelradschaufeln (7) beabstandet angeordneten Tragring (10) aufweist, der in den Ausblasabschnitt (4) des Gehäuses eingreift und das Flügelrad (5) an dem Gehäuse fixiert.

2. Radialgebläse nach Anspruch 1, **dadurch gekennzeichnet, dass** das Flügelrad (5) eine Ausblasquerschnittsfläche des Ausblasabschnitts (4) vollständig überdeckt.

3. Radialgebläse nach Anspruch 2, **dadurch gekennzeichnet, dass** die Ausblasquerschnittsfläche des Ausblasabschnitts (4) rund ist.

4. Radialgebläse nach einem der vorigen Ansprüche, **dadurch gekennzeichnet, dass** das Flügelrad (5) einen die Flügelradschaufeln (7) radial außenseitig umgebenden Ring (8) aufweist, der sich in Umfangsrichtung entlang einem radialen Ende der Vielzahl der Flügelradschaufeln (7) erstreckt.

5. Radialgebläse nach dem vorigen Anspruch, **dadurch gekennzeichnet, dass** ein Innendurchmessers Di des Rings (8) gegenüber einem Ausblasdurchmesser Da des Ausblasabschnitts (4) ein Größenverhältnis aufweist, dass gilt 0,9*Da ≤ Di ≤ 1,1*Da.

6. Radialgebläse nach einem der vorigen Ansprüche, **dadurch gekennzeichnet, dass** der Ausblasabschnitt (4) mindestens eine innenseitige umlaufende Nut (6) aufweist, in die sich das Flügelrad (5) radial hinein erstreckt.

7. Radialgebläse nach einem der vorigen Ansprüche, **dadurch gekennzeichnet, dass** zumindest zwischen Teilen des Flügelrads (5) und dem Gehäuse ein umlaufender Spalt S vorgesehen ist, der im Verhältnis zum Ausblasdurchmesser Da eine Größe aufweist, dass gilt 0,0025*Da ≤ S ≤ 0,05*Da.

8. Radialgebläse nach einem der vorigen Ansprüche, **dadurch gekennzeichnet, dass** das Flügelrad (5) axial mittig eine gelagerte Nabe (9) mit einem Nabendurchmesser N aufweist, wobei der Nabendurchmesser N eine Größe im Verhältnis zum Ausblasdurchmesser Da aufweist, dass gilt 0,05*Da ≤ N ≤ 0,3*Da.

9. Radialgebläse nach dem vorigen Anspruch, **dadurch gekennzeichnet, dass** die Nabe (9) des Flügelrads (5) in zumindest einer axialen Richtung konisch zulaufend ausgebildet ist.

10. Radialgebläse nach einem der vorigen Ansprüche, **dadurch gekennzeichnet, dass** die Flügelradschaufeln (7) jeweils eine axiale Länge L im Verhältnis zum Ausblasdurchmesser Da aufweisen, dass gilt 0,05*Da ≤ L ≤ 0,3*Da.

11. Radialgebläse nach Anspruch 1, **dadurch gekennzeichnet, dass** der Tragring (10) zumindest eine Tragstrebe (11) aufweist und die Anzahl der Tragstreben (11) ungleich der Anzahl der Flügelradschaufeln (7) ist.

12. Radialgebläse nach Anspruch 1 und 6, **dadurch gekennzeichnet, dass** der Tragring im montierten Zustand des Flügelrads (5) formschlüssig in die Nut des Ausblasabschnitts (4) eingreift.

13. Radialgebläse nach dem vorigen Anspruch, **dadurch gekennzeichnet, dass** das Flügelrad (5) Mittel zur Feststellung der Rotationsgeschwindigkeit der Flügelradschaufeln (7) aufweisen.

14. Radialgebläse nach dem vorigen Anspruch, **dadurch gekennzeichnet, dass** mindestens zwei gegenüberliegende Flügelradschaufeln (7) jeweils einen Magneten (21) aufweisen.

15. Radialgebläse nach einem der vorigen Ansprüche, **dadurch gekennzeichnet, dass** an dem Flügelrad (5) ein Temperatursensor und/oder Feuchtesensor angeordnet ist, der die Temperatur und/oder Feuchte des Luftvolumenstroms erfasst.

## Claims

1. A radial fan having a housing, in which a motor-drivable fan wheel is arranged, which generates an air volume flow during operation, wherein the housing comprises a blow-out portion (4) in which an impeller (5) is arranged, having a plurality of impeller blades (7) spaced apart in the circumferential direction, via which the impeller (5) can be driven by the air volume flow generated by the fan wheel, **characterized in that** the impeller (5) comprises a support ring (10) arranged axially spaced apart from the impeller blades (7), which engages with the blow-out portion (4) of the housing and secures the impeller (5) on the housing.

2. The radial fan as claimed in claim 1, **characterized in that** the impeller (5) entirely covers a blow-out cross section area of the blow-out portion (4).

3. The radial fan as claimed in claim 2, **characterized in that** the blow-out cross section area of the blow-out portion (4) is round.

4. The radial fan as claimed in one of the preceding claims, **characterized in that** the impeller (5) comprises a ring (8) radially surrounding the impeller blades (7) on the outside, which extends in the circumferential direction along a radial end of the plurality of impeller blades (7).

5. The radial fan as claimed in the preceding claim, **characterized in that** an inner diameter Di of the ring (8) has a size ratio with respect to a blow-out diameter Da of the blow-out portion (4) such that 0.9*Da ≤ Di ≤ 1.1*Da.

6. The radial fan as claimed in one of the preceding claims, **characterized in that** the blow-out portion (4) has at least one interior encircling groove (6), into which the impeller (5) extends radially.

7. The radial fan as claimed in one of the preceding claims, **characterized in that** an encircling gap S is provided at least between parts of the impeller (5) and the housing, having a size in relation to the blow-out diameter Da such that 0.0025*Da ≤ S ≤ 0.05*Da.

8. The radial fan as claimed in one of the preceding claims, **characterized in that** the impeller (5) has a hub (9) mounted axially in the center with a hub diameter N, wherein the hub diameter N has a size in relation to the blow-out diameter Da such that 0.05*Da ≤ N ≤ 0.3*Da.

9. The radial fan as claimed in the preceding claim, **characterized in that** the hub (9) of the impeller (5) is formed to be conically tapering in at least one axial direction.

10. The radial fan as claimed in one of the preceding claims, **characterized in that** the impeller blades (7) have a respective axial length L in relation to the blow-out diameter Da such that 0.05*Da ≤ L ≤ 0.3*Da.

11. The radial fan as claimed in claim 1, **characterized in that** the support ring (10) comprises at least one support strut (11) and the number of support struts (11) is not equal to the number of impeller blades (7).

12. The radial fan as claimed in claim 1 and 6, **characterized in that** the support ring in the mounted state of the impeller (5) engages with form fit in the groove of the blow-out portion (4).

13. The radial fan as claimed in the preceding claim, **characterized in that** the impeller (5) comprises means of setting the rotational speed of the impeller blades (7).

14. The radial fan as claimed in the preceding claim, **characterized in that** at least two oppositely situated impeller blades (7) comprise a respective magnet (21).

15. The radial fan as claimed in one of the preceding claims, **characterized in that** a temperature sensor and/or humidity sensor is arranged on the impeller (5), which detects the temperature and/or humidity of the air volume flow.

## Revendications

1. Ventilateur radial muni d'un boîtier, dans lequel une roue de ventilateur pouvant être entraînée par un moteur est disposée, laquelle roue de ventilateur génère un débit d'air volumique pendant le fonctionnement, dans lequel le boîtier comporte une section de soufflage (4) dans laquelle une roue à ailettes (5) est disposée, qui comporte une pluralité d'aubes de roue à ailettes (7) espacées dans la direction circonférentielle et par l'intermédiaire desquelles la roue à ailettes (5) peut être entraînée par le débit d'air volumique généré par la roue de ventilateur, **caractérisé en ce que** la roue à ailettes (5) présente une bague de support (10) disposée de manière axialement espacée par rapport aux aubes de roue à ailettes (7) et qui vient en prise dans la section de soufflage (4) du boîtier et fixe la roue à ailettes (5) au boîtier.

2. Ventilateur radial selon la revendication 1, **caractérisé en ce que** la roue à ailettes (5) couvre complètement une section transversale de soufflage de la section de soufflage (4).

3. Ventilateur radial selon la revendication 2, **caractérisé en ce que** la section transversale de soufflage de la section de soufflage (4) est ronde.

4. Ventilateur radial selon l'une des revendications précédentes, **caractérisé en ce que** la roue à ailettes (5) présente une bague (8) qui entoure les aubes de roue à ailettes (7) radialement à l'extérieur et s'étend dans la direction circonférentielle le long d'une extrémité radiale de la pluralité des aubes de roue à ailettes (7).

5. Ventilateur radial selon la revendication précédente, **caractérisé en ce qu'**un diamètre intérieur Di de la bague (8) présente une dimension par rapport à un diamètre de soufflage Da de la section de soufflage (4) qui est de 0,9 * Da ≤ Di ≤ 1,1 * Da.

6. Ventilateur radial selon l'une des revendications précédentes, **caractérisé en ce que** la section de soufflage (4) présente au moins une rainure circonférentielle intérieure (6) dans laquelle s'étend radialement la roue à ailettes (5).

7. Ventilateur radial selon l'une des revendications précédentes, **caractérisé en ce qu'**un intervalle périphérique S est prévu au moins entre des parties de la roue à ailettes (5) et le boîtier, cet intervalle S ayant une dimension par rapport au diamètre de soufflage Da qui est de 0,0025 * Da ≤ S ≤ 0,05 * Da.

8. Ventilateur radial selon l'une des revendications précédentes, **caractérisé en ce que** la roue à ailettes (5) présente un moyeu (9) monté axialement au centre ayant un diamètre de moyeu N, dans lequel le diamètre de moyeu N a une dimension par rapport au diamètre de soufflage Da, qui est de 0,05 * Da ≤ N ≤ 0,3 * Da.

9. Ventilateur radial selon la revendication précédente, **caractérisé en ce que** le moyeu (9) de la roue à ailettes (5) est conçu pour s'effiler coniquement dans au moins une direction axiale.

10. Ventilateur radial selon l'une des revendications précédentes, **caractérisé en ce que** les aubes de roue à ailettes (7) présentent chacune une longueur axiale L par rapport au diamètre de soufflage Da, qui est de 0,05 * Da ≤ L ≤ 0,3 * Da.

11. Ventilateur radial selon la revendication 1, **caractérisé en ce que** la bague de support (10) comporte au moins un montant de support (11) et le nombre de montants de support (11) n'est pas égal au nombre d'aubes de roue à ailettes (7).

12. Ventilateur radial selon les revendications 1 et 6, **caractérisé en ce que** la bague de support vient en prise par complémentarité de forme dans la rainure de la section de soufflage (4) à l'état monté de la roue à ailettes (5).

13. Ventilateur radial selon la revendication précédente, **caractérisé en ce que** la roue à ailettes (5) comporte des moyens pour déterminer la vitesse de rotation des aubes de la roue à ailettes (7).

14. Ventilateur radial selon la revendication précédente, **caractérisé en ce qu'**au moins deux aubes de roue à ailettes opposées (7) comportent chacune un aimant (21).

15. Ventilateur radial selon l'une des revendications précédentes, **caractérisé en ce qu'**un capteur de température et/ou d'humidité, qui détecte la température et/ou l'humidité du débit d'air volumique, est disposé sur la roue à ailettes (5) .
